# EUROPEAN PATENT APPLICATION

(11) **EP 3 670 143 A1**
(43) Date of publication of application: **24.06.2020**
(21) Application number: 19217291.4
(22) Date of filing: 18.12.2019
(51) Int. Cl.: B29C 48/49, B29C 48/16, B29C 48/30, B29D 30/52, B29C 48/305, B29C 48/375, B29C 48/07, B29C 48/92, B29D 30/62, B29C 48/12, B29C 48/25

(54) **APPARATUS AND METHOD FOR FORMING AN ENCAPSULATED STRIP**

(30) Priority: 19.12.2018 US 201862781752 P; 19.12.2018 US 201862781757 P; 09.10.2019 US 201916596836; 09.10.2019 US 201916596873
(71) Applicant: The Goodyear Tire & Rubber Company, Akron, OH 44316 (US)
(72) Inventor: CHEN, Hongbing, Broadview Heights OH 44147 (US); BALDAN, Adam Mark, Copley OH 44321 (US); DYRLUND, Christopher David, Canton OH 44705 (US)
(74) Representative: Kutsch, Bernd

(57) **Abstract**

An apparatus for forming a continuous strip of a first compound (A) encapsulated by a second compound (B) is disclosed. The apparatus (10) comprises a first extruder (30) for extruding a first compound (A), the first extruder (30) having an outlet end (34) connected to a first gear pump (42), and a second extruder (60) for extruding a second compound (B), the second extruder (60) having an outlet end (64) connected to a second gear pump (44). An outlet channel (46) of the first gear pump (42) and an outlet channel (48) of the second gear pump (60) are fed into a respective first and second passageway (84, 86) of a nozzle (80). The first and second passageways (84, 86) of the nozzle (80) are separate from each other upstream of a nozzle outlet or die (102). The nozzle (80) has an insert (92) for forming the first and second passageway (84, 86) in the nozzle (80) or for separating the first and second passageway (84, 86) in the nozzle (80). The insert (92) has a distal end positioned at or close to the nozzle outlet or die (102), the distal end having an elongated flat portion (94) or nose. Also, a method for forming a continuous strip of compound of a first compound (A) encapsulated by a second compound (B) is disclosed.

## Description

### Field of the Invention

The invention relates in general to tire manufacturing, and more particularly to an apparatus and a method for forming a tire component, particularly a continuous strip of a first elastomer that is encapsulated by a second elastomer, and more particularly, to an encapsulated strip of sealant material.

### Background of the Invention

Pneumatic tires with puncture sealing properties are known to those skilled in the tire art. Typically, such tires include a layer of sealant typically applied or sprayed on the inside of the tire post cure. The sealant layer may also be placed between the inner liner and ply. The problem with a sealant layer is that the sealant may migrate during high speed operation of the tire due to centrifugal forces. Thus, it is desired to have an improved method and apparatus for forming an encapsulated sealant for installation on the inside of the tire.

### Summary of the Invention

The invention relates to an apparatus in accordance with claim 1 and the a method in accordance with claim 10.

Dependent claims refer to preferred embodiments of the invention.

In a preferred embodiment of the invention, an apparatus for forming a continuous strip of a first compound A encapsulated by a second compound B is provided, the apparatus comprising: a first extruder for extruding a first compound A, and having an outlet connected to a first gear pump; a second extruder for extruding a second compound B, and having an outlet connected to a second gear pump; wherein the outlet of the first gear pump and the outlet of the second gear pump are fed into a respective first and second passageway of a nozzle, wherein the first and second passageways are separate from each other upstream of the nozzle outlet; said nozzle having an insert for forming the first and second passageway in the nozzle; and wherein the insert has a distal end for positioning at the nozzle outlet, wherein the distal end has an elongated flat portion.

In a preferred aspect of the invention, there are slits located on each end of the elongated flat portion of the insert to facilitate encapsulation of the flow at the entrance to the die at the nozzle outlet.

In a preferred aspect of the invention, the insert is removable from the nozzle.

In a preferred aspect of the invention, the insert has a distal end for positioning adjacent a die outlet of the nozzle, wherein the distal end has an elongated flat portion.

In a preferred aspect of the invention, the insert has a tapered upper surface.

In a preferred aspect of the invention, the ratio of the first gear pump to the second gear pump may be varied during operation of the system.

In a preferred aspect of the invention, the elongated flat portion of the insert is positioned at the inlet to the die of the nozzle.

In a preferred aspect of the invention, the insert has a flat bottom portion forming a channel.

In a preferred aspect of the invention, the insert has a circular cross section at an inlet end that transitions to a rectangular cross section at the outlet forming an elongated flat rectangular portion.

In a preferred embodiment of the invention, also a method for forming a continuous strip of compound of a first compound encapsulated by a second compound is provided. The method comprises the steps of: extruding a first compound through a first extruder and then pumping the first compound through a first gear pump and into a first passageway of a nozzle; extruding a second compound through a second extruder and then pumping the second compound through a second gear pump and into a second passageway of a nozzle; wherein the first and second passageways are joined together at the inlet of the die outlet of a nozzle.

In a preferred aspect of the invention, the first and second compound exit the die outlet of the nozzle wherein the first compound is encapsulated by the second compound forming an encapsulated strip of the first compound with a skin of the second compound.

In a preferred aspect of the invention, an encapsulated strip of rubber is formed having a skin, wherein the ratio of the volume of the encapsulated rubber to the volume of the skin is varied by changing the ratio of the speed of the first gear pump to the second gear pump.

In a preferred aspect of the invention, the ratio of the first gear pump to the second gear pump may be varied during operation of the system.

### Definitions

"Axial" and "axially" means the lines or directions that are parallel to the axis of rotation of the tire.

"Circumferential" means lines or directions extending along the perimeter of the surface of the annular tread perpendicular to the axial direction.

"Radial" and "radially" mean directions radially toward or away from the axis of rotation of the tire.

### Brief Description of the Drawings

The invention will be described by way of example and with reference to the accompanying drawings in which:
FIG. 1 is a schematic of a dual compound strip forming apparatus;
FIG. 2A is a close-up view of a nozzle of the compound strip forming apparatus of FIG. 1;
FIG. 2B is a close-up view of the nozzle outlet;
FIG. 3A is a side cross-sectional view of the nozzle of FIG. 2B;
FIG. 3B is a front view of the nozzle of FIG. 3A;
FIG. 3C is a side perspective view of the nozzle of FIG. 3A;
FIG. 3D is a cross section along the lines D-D of FIG. 3A;
FIG. 3E is a close-up view of the circled portion of FIG. 3A;
FIG. 3F is a rear view of the nozzle;
FIG. 4A is a cross-sectional view of a nozzle of the present invention;
FIG. 4B is a cross-sectional view of a nozzle and removable insert;
FIG. 4C is a top perspective view of a removable insert;
FIG. 4D is a bottom perspective view of a removable insert;
FIG. 5A illustrates a 50%-50% encapsulated strip, while FIG. 5B illustrates a 90%-10% encapsulated strip;
FIG. 6A illustrates an encapsulated strip with a 90% sealant 10% outer layer;
FIG. 6B illustrates an encapsulated strip with an 80% sealant 20% outer layer; and
FIG. 6C illustrates an encapsulated strip with a 50% sealant 50% outer layer.

### Detailed Description of Example Embodiments the Invention

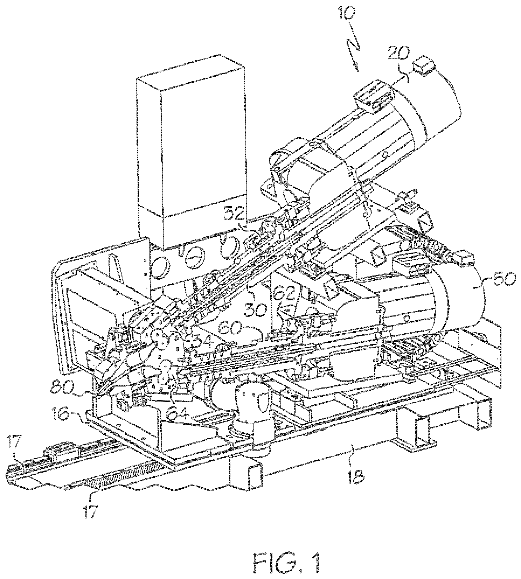

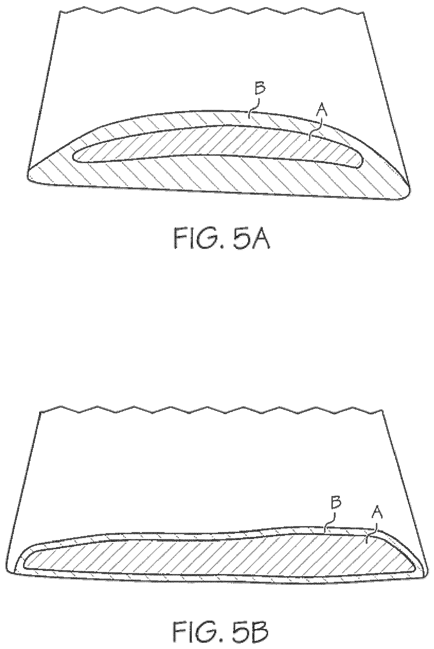

FIG. 1 illustrates a first embodiment of a dual compound strip forming apparatus 10 suitable for use for making a continuous strip of a first rubber compound A such as a tire sealant material that is encapsulated in a second rubber compound B as shown in FIGS. 5-6. The dual compound strip forming apparatus 10 is not limited to tire applications and may be used for example, to make other rubber components not related to tires such as conveyors, hoses, belts, etc. The dual compound strip forming apparatus 10 may be provided directly at the tire or component building station for direct application of the rubber composition to a tire, component, or other component building apparatus.

The dual compound strip forming apparatus 10 is mounted upon a translatable support bar 16 that is slidable fore and aft on parallel rails 17 of a support frame 18 so that the dual compound strip forming apparatus 10 can translate fore and aft in relation to a tire building machine (not shown).

As shown in FIG. 1, the dual compound strip forming apparatus 10 includes a first extruder 30 and a second extruder 60, preferably arranged in close proximity as shown. The first extruder 30 has an inlet 32 for receiving a first rubber composition A as described in more detail, below. The first extruder 30 is driven by motor 20, preferably electrical motor 20. The second extruder 60 has an inlet 62 for receiving a second rubber composition B as described in more detail, below. The second extruder 60 is driven by motor 50, preferably electrical motor 50. The first or second extruder 30, 60 may be any commercial extruder suitable for processing of rubber or elastomer compounds. The extruder may be a commercially available extruder commonly known by those skilled in the art as a pin type extruder, a twin screw or a single screw extruder, or a ring type of extruder. Preferably, the extruder has a length to diameter ratio (L/D) of 5 or 3 to 4, but is may also range from 3 to 5. A pin type of extruder is preferred.

The first extruder inlet 32 receives a first compound A, examples of which are described in more detail, below. The first extruder 30 functions to warm up a first compound A to the temperature in the range of from 80°C to 150°C, preferably from 90°C to 120°C, and to masticate the rubber composition as needed. The output end 34 of the first extruder 30 is connected to an inlet end 43 of a first gear pump 42. Compound A is thus first extruded by the first extruder 30 and then pumped by the first gear pump 42 into a nozzle 80. The first gear pump 42 functions as a metering device and a pump and may have gears such as planetary gears, bevel gears or other gears.

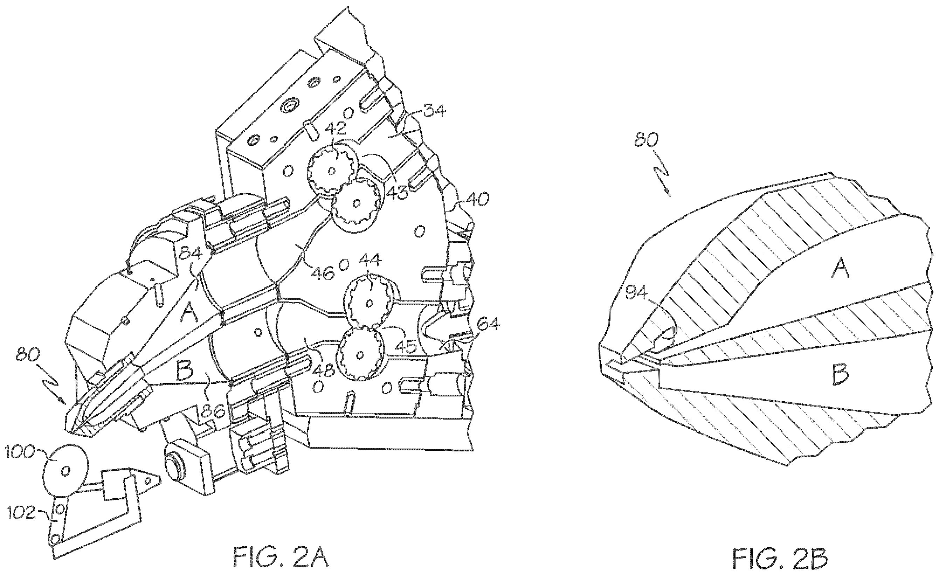

The second extruder inlet 62 receives a second compound B, examples of which are described in more detail, below. The second extruder 60 functions to warm up the second compound B to the temperature in the range of from 80°C to 150°C, preferably 90°C to 120°C, and to masticate the rubber composition as needed. The output end 64 of the second extruder 60 is connected to an inlet end 45 of a second gear pump 44 as shown in Fig. 2A. Compound B is thus extruded by the second extruder 60 and then pumped by the second gear pump 44, which functions as a metering device and a pump and may have gears such as planetary gears, bevel gears or other gears.

The first and second gear pumps 42, 44 may be housed in a single housing 40 and are preferably placed in close proximity to each other so that the outlet channels 46, 48 of the first and second gear pumps are also in close proximity, as shown in FIG. 2A. The gear pump outlet channels 46, 48 are fed into respective first and second nozzle channels 84, 86 of nozzle 80.

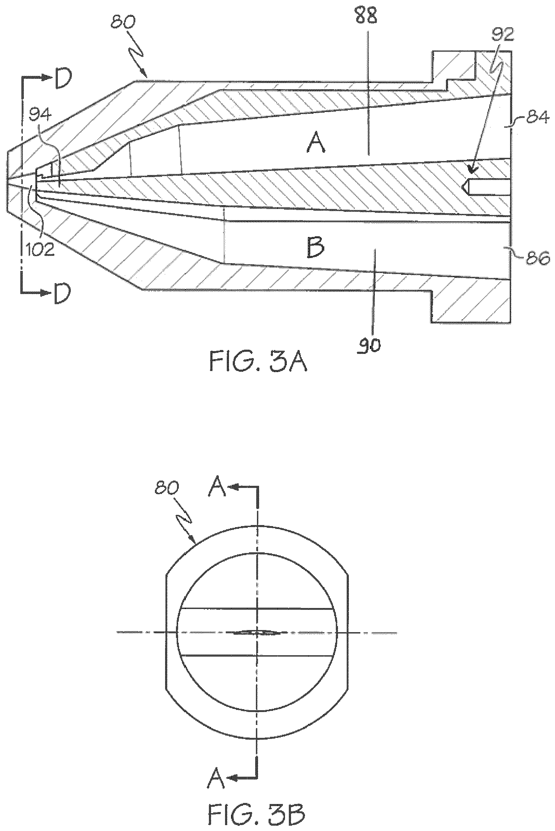

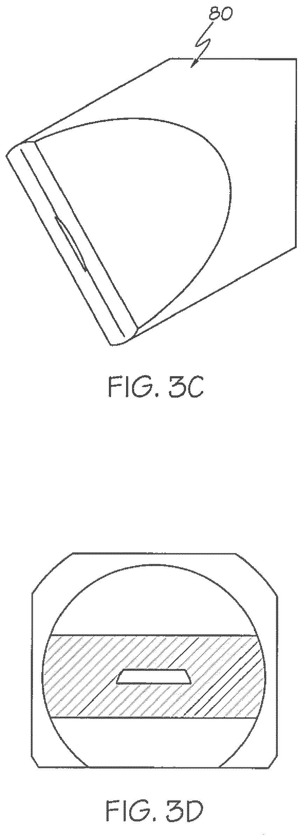

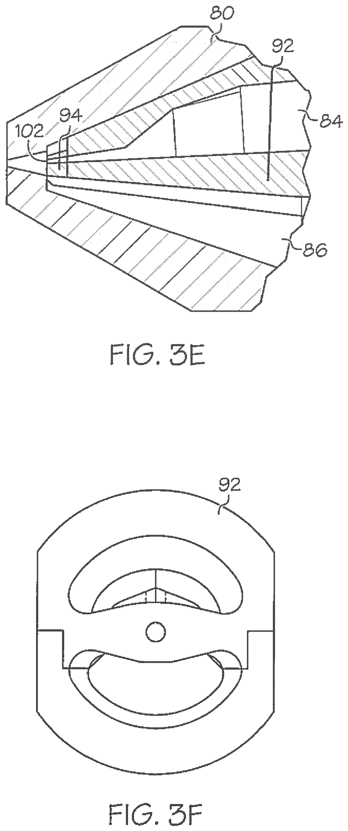

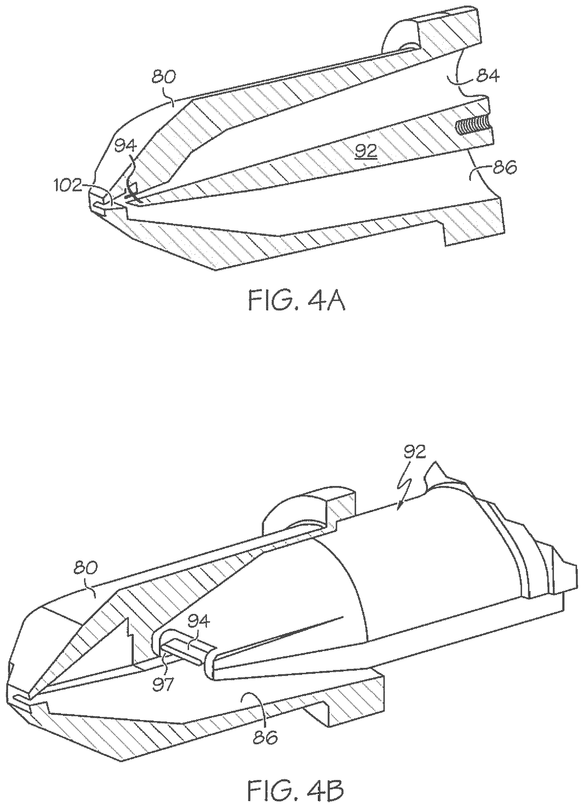

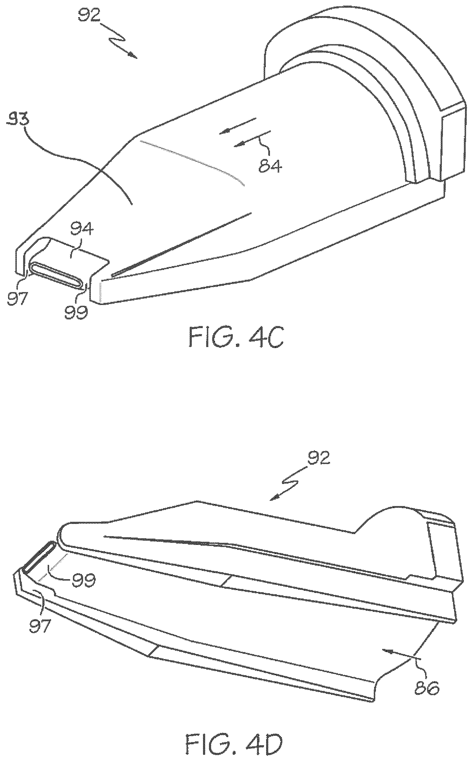

FIG. 3A illustrates a cross-sectional side view of the nozzle 80. The first and second nozzle channels 84, 86 are formed by a removable insert 92 that is used to separate the internal flow passageways 88, 90. FIG. 4C illustrates the upper surface 93 of the removable insert 92 that forms the first nozzle channel 84 that flows the compound A to be encapsulated. The removable insert 92 has an upper surface that terminates in an elongated flat portion 94 that is located at the entrance to the die 102. There are two slits or short passageways 97, 99 on each side of the elongated flat portion 94 of the insert that facilitate the encapsulation flow of compound B around compound A.

The first and second nozzle channels 84, 86 remain separated from each other so that the two rubber flow streams do not merge until the exit of the nozzle. At the entrance to the flow die 102, the compound B flow stream flows around the compound A stream so that a continuous strip of compound A is encapsulated by a thin skin of compound B. Thus, the flow streams of compound A and B do not mix together.

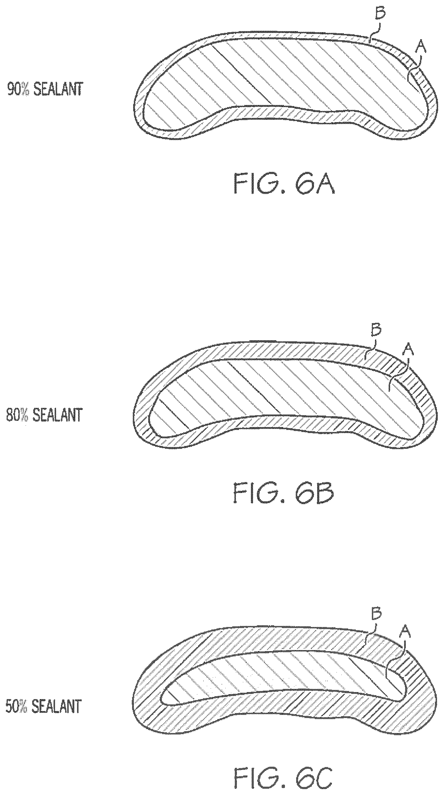

Thus, the apparatus of the invention produces an encapsulated continuous strip of compound A that is encapsulated by skin of compound B. An example strip is shown in FIG. 5B, with the sealant being 90% of the mixture and being encapsulated by an outer shell or skin of 10% by volume of the mixture. FIG. 5A illustrates 50% of the sealant being encapsulated by an outer shell of 50% by volume of the mixture. FIGS. 6A-6C illustrate side by side comparison of varying amounts of sealant.

The volume ratio of compound A to compound B may be altered, as shown in FIG. 6A with 90% compound A, 10% compound B, while FIG. 6B illustrates 80% compound A, 20% compound B, and FIG. 6C illustrates 50% A, 50% B. The volume ratio of A to B is varied by varying the ratio of the speed of gear pump A to gear pump B.

In one embodiment, the sealant material suitable for use is described in US-A-4,359,078, in US-B-6,837,287 or in US-A-2006/0169393.

The outer skin material is selected to bond readily to the inner liner or other layers of the tire. Preferably, the skin material has the same composition as one of the tire components to which the sealant strip is bonded to.

A method for forming a continuous strip of compound of a first compound A encapsulated by a second compound B comprises the steps of: extruding a first compound A through a first extruder and then pumping the first compound A through a first gear pump and into a first passageway of a nozzle, extruding a second compound B through a second extruder and then pumping the second compound B through a second gear pump and into a second passageway of a nozzle, wherein the first and second passageways are joined together at the inlet of the die outlet of a nozzle. Preferably, the first and second compound exit the die outlet of the nozzle wherein the first compound is encapsulated by the second compound. The nozzle preferably has a removable insert which divides the nozzle into a separated first and second passageway, wherein the removable insert has a distal end for positioning adjacent a die outlet of the nozzle, wherein the distal end has an elongated flat portion. Preferably there are slits located on each end of the elongated flat portion to facilitate encapsulation of the flow. More preferably, the ratio of the volume of the encapsulated rubber to the volume of the skin is varied by changing the ratio of the speed of the first gear pump to the second gear pump.

A rotatable stitcher roller 100 is mounted adjacent the nozzle outlet of the nozzle assembly 80. The stitcher roller is pivotally mounted upon a support stand 104. An actuator connected to the stitcher roller pivots or rotates the support stand about its end when actuated.

## Claims

1. An apparatus for forming a continuous strip of a first compound (A) encapsulated by a second compound (B), the apparatus (10) comprising:
a first extruder (30) for extruding a first compound (A), the first extruder (30) having an outlet end (34) connected to a first gear pump (42);
a second extruder (60) for extruding a second compound (B), the second extruder (60) having an outlet end (64) connected to a second gear pump (44);
wherein an outlet channel (46) of the first gear pump (42) and an outlet channel (48) of the second gear pump (60) are fed into a respective first and second passageway (84, 86) of a nozzle (80);
wherein the first and second passageways (84, 86) of the nozzle (80) are separate from each other upstream of a nozzle outlet or die (102);
wherein the nozzle (80) has an insert (92) for forming the first and second passageway (84, 86) in the nozzle (80) or for separating the first and second passageway (84, 86) in the nozzle (80); and
wherein the insert (92) has a distal end positioned at or close to the nozzle outlet or die (102), the distal end having an elongated flat portion (94) or nose.

2. The apparatus of claim 1 wherein there are slits or passageways (97, 99) adjacent to the elongated flat portion (94) of the insert (92) to facilitate encapsulation of the flow at the entrance to the die (102) at the nozzle outlet.

3. The apparatus of claim 1 or 2 wherein there is at least one slit or passageway (97, 99) located next to or on each lateral end of the elongated flat portion (94) of the insert (92) to facilitate encapsulation of the flow at the entrance to the die (102) at the nozzle outlet.

4. The apparatus of at least one of the previous claims wherein the insert (92) is removable from the nozzle (80).

5. The apparatus of at least one of the previous claims wherein the distal end of the insert (92) is positioned adjacent to the die (102) at the nozzle outlet.

6. The apparatus of at least one of the previous claims wherein the insert (92) has a tapered surface, preferably a tapered upper surface; and/or wherein the insert (92) has a flat bottom portion forming a channel.

7. The apparatus of at least one of the previous claims further comprising means to vary the ratio of the speed of the first gear pump (42) to the second gear pump (44) during operation of the apparatus (10).

8. The apparatus of at least one of the previous claims wherein the elongated flat portion (94) of the insert (92) is positioned at the inlet to the die (102) of the nozzle (80).

9. The apparatus of at least one of the previous claims wherein the insert (92) has a circular or elliptical cross section at an inlet end of the nozzle (80) that transitions to a rectangular cross section at or proximal to the outlet end of the nozzle (80) forming an elongated flat rectangular portion (94) of the insert (92).

10. A method for forming a continuous strip of compound of a first compound (A) encapsulated by a second compound (B), the method comprising the steps of:
extruding a first compound (A) through a first extruder (30) and then pumping the first compound (A) through a first gear pump (42) and into a first passageway (84) of a nozzle (80);
extruding a second compound (B) through a second extruder (60) and then pumping the second compound (B) through a second gear pump (60) and into a second passageway (86) of the nozzle (80);
wherein the first and second passageways (84, 86) are joined together at the inlet of an outlet die (102) of the nozzle (80).

11. The method of claim 10 wherein the first and the second compound (A, B) exit the die (102) of the nozzle (80) with the first compound (A) encapsulated by the second compound (B); and/or wherein the first and the second compound (A, B) exit the die (102) of the nozzle (80) as a strip of the first compound (A) with a skin of the second compound (B).

12. The method of claim 10 or 11 wherein the ratio of the speed of the first gear pump (42) to the speed of the second gear pump (44) is varied during forming the continuous strip.

13. The method of at least one of the claims 10 to 12 wherein a continuous strip of rubber or rubber compound is formed, the continuous strip having an encapsulated strip of rubber or rubber compound and a skin, preferably skin of rubber or rubber compound.

14. The method of claim 13 wherein the encapsulated strip of rubber or rubber compound is of the first compound (A) and the skin is of the second compound (B).

15. The method of at least one of the claims 10 to 14 wherein the first compound (A) is a tire sealant material.
